# NEUE EUROPÄISCHE PATENTSCHRIFT

(11) **EP 1 404 985 B2**
(45) Veröffentlichungstag und Bekanntmachung des Hinweises auf die Entscheidung über den Einspruch: **21.10.2015**
(45) Hinweis auf die Patenterteilung: 04.11.2009
(21) Anmeldenummer: 02784826.6
(22) Anmeldetag: 06.06.2002
(51) Int. Cl.: F16D 25/10

(54) **MEHRFACH-KUPPLUNGSEINRICHTUNG, INSBESONDERE DOPPEL-KUPPLUNGSEINRICHTUNG**
MULTIPLE CLUTCH SYSTEM, ESPECIALLY A DOUBLE CLUTCH SYSTEM
SYSTEME D'EMBRAYAGE MULTIPLE, NOTAMMENT SYSTEME D'EMBRAYAGE DOUBLE

(30) Priorität: 11.07.2001 DE 10133638
(43) Veröffentlichungstag der Anmeldung: 07.04.2004
(73) Patentinhaber: ZF Friedrichshafen AG, 80846 Friedrichshafen (DE)
(72) Erfinder: EBERT, Angelika, 97421 Schweinfurt (DE); GROSSPIETSCH, Wolfgang, 97422 Schweinfurt (DE); KRAUS, Paul, 97464 Niederwerrn (DE); KUHSTREBE, Jochen, 97318 Westheim (DE); KUNDERMANN, Wolfgang, 97422 Schweinfurt (DE); REISSER, Wolfgang, 97526 Sennfeld (DE); STEINER, Eduard, 97228 Rottendorf (DE)
(74) Vertreter: 2SPL Patentanwälte PartG mbB
(86) Internationale Anmeldenummer: PCT/EP2002/006211
(87) Internationale Veröffentlichungsnummer: WO 2003/006840

(56) Entgegenhaltungen:
- EP-A1- 1 236 918
- EP-A2- 1 085 237
- WO-A1-02/084135
- DE-A- 4 332 466
- DE-A- 10 004 179
- DE-A1- 4 224 360
- DE-A1- 4 322 406
- DE-A1- 4 332 466
- DE-A1- 10 004 179
- DE-A1- 10 063 781
- DE-A1- 10 118 233
- DE-A1- 19 809 534
- DE-A1- 19 821 164
- GB-A- 2 036 203
- US-A- 4 463 621
- US-A- 5 813 508
- US-A- 5 813 508
- US-A- 5 887 690
- US-A- 5 887 690

## Beschreibung

Die Erfindung betrifft eine Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung aufweist, wobei von den beiden Getriebeeingangswellen die eine sich durch die andere erstreckt, wobei eine Eingangsseite der Kupplungseinrichtung eine an einer Abtriebswelle der Antriebseinheit direkt oder indirekt angekoppelte oder ankoppelbare Eingangsnabe oder Eingangswelle (im Folgenden in der Regel nur als Eingangsnabe bezeichnet) aufweist, die mit einer Eingangsseite der ersten Kupplungsanordnung und einer Eingangsseite der zweiten Kupplungsanordnung in Drehmitnahmeverbindung steht, nach allen Merkmalen des Oberbegriffs des unabhängigen Anspruchs 1. Die Erfindung betrifft speziell eine derartige Kupplungseinrichtung, bei der die Kupplungsanordnungen jeweils mit einem integrierten, sich im Betrieb mitdrehenden hydraulischen Nehmerzylinder ausgeführt sind, über den die jeweilige Kupplungsanordnung auf hydraulischem Wege betätigbar ist sowie eine derartige Kupplungseinrichtung, bei der die Kupplungsanordnungen für ein Laufen unter Einwirkung eines Betriebsmediums vorgesehen, insbesondere als nasslaufende Lamellen-Kupplungsanordnungen ausgeführt sind.

Mehrfach-Kupplungseinrichtungen, speziell Doppel-Kupplungseinrichtungen der eingangs angesprochenen Art sind beispielsweise aus der DE 100 04 179 A1 bekannt. Derartige, auch als Doppelkupplungen bezeichneten Kupplungseinrichtungen haben in jüngerer Zeit ein größeres Interesse gefunden, da sie in Verbindung mit einem sogenannten Lastschalt- oder Doppelkupplungsgetriebe bei entsprechender Automatisierung einen Fahrkomfort zu bieten versprechen, der dem Fahrkomfort eines herkömmlichen Automatikgetriebes mit Drehmomentwandler entspricht, ohne dass die Verluste eines Drehmomentwandlers auftreten. Ein wichtiger Faktor bei der Auslegung derartiger Kupplungseinrichtungen ist der für die Kupplungseinrichtung benötigte Bauraum, insbesondere der benötigte axiale Bauraum, das Gewicht der Kupplungseinrichtung und die Dichtheit und Dauerfestigkeit von Drehzuführungen zur Zufuhr von Betriebsmedium bzw. Hydraulikdruckmedium.

Bei den aus der DE 100 04 179 A1 bekannten Konstruktionen ist getriebeseitig eine Anschlusshülse vorgesehen, die eine mit Ölkanälen ausgeführte, an der radial äußeren Getriebeeingangswelle gelagerte Lagerhülse aufnimmt und mit dieser Drehdurchführungen bildet. Die Dichtungen der Drehzuführungen sind auf einem vergleichsweise großen Durchmesser wirksam und dementsprechend aufgrund der im Betrieb auftretenden Rotation der Lagerhülse relativ zur Aufnahmehülse einem recht großen Verschleiß ausgesetzt, so dass eine entsprechend begrenzte Dauerfestigkeit resultiert. Dies gilt sowohl für der Zufuhr von Hydraulikmedium zu den beiden Nehmerzylindem zugeordnete Drehdurchführungen als auch für eine der Zufuhr von Kühlöl zugeordnete Drehdurchführung im Bereich der genannten Aufnahmehülse- und Lagerhülse-Kombination.

Die Lagerhülse und die zugeordnete Aufnahmehülse weisen überdies ein zumindest nach heutigen Maßstäben nicht unerhebliches Gewicht auf und tragen auch nicht unerheblich zur axialen Gesamt-Baulänge der Kupplungseinrichtung bei.

Eine Mehrfach-Kupplungseinrichtung nach allen Merkmalen des Oberbegriffes des Anspruchs 1, wobei insbesondere der Trägerabschnitt des zum radial äußeren Lamellenpaket zugehörigen Außenlamellenträgers den Trägerabschnitt des zum radial inneren Lamellenpaket zugehörigen Außenlamellenträgers bildet, ist aus DE 43 32 466, das als nächstliegender Stand der Technik angesehen wird, offenbart.

### [Aufgabe der Erfindung]

Es ist die Aufgabe der vorliegenden Erfindung, die Gestaltung der Mehrfach-Kupplungsanordnung zu verbessern.

### [Darstellung der Erfindung]

Diese Aufgabe wird durch den Merkmalen des Anspruchs 1 gelöst. Nach dem Erfindungsvorschlag weisen die beiden Außenlamellenträger nicht jeweils einen eigenen Trägerabschnitt auf, so dass axialer Bauraum und Gewicht gespart wird. Der Trägerabschnitt ist an einer Lagerhülse fest angebracht oder integral, ggf. einstückig, mit dieser ausgeführt ist, über die die Kupplungseinrichtung unter Vermittlung einer Radiallageranordnung, an der radial äußeren der Getriebeeingangswellen gelagert ist.

Bei der Erfindung ist vorgesehen, dass von den beiden Kupplungsanordnungen die das radial äußere Lamellenpaket aufweisende Kupplungsanordnung mit ihrem Innenlamellenträger an der radial inneren Getriebeeingangswelle angeschlossen oder anschließbar ist und die das radial innere Lamellenpaket aufweisende Kupplungsanordnung mit ihrem Innenlamellenträger an der radial äußeren Getriebeeingangswelle angeschlossen oder anschließbar ist.

Die Eingangsnabe kann vorteilhaft über eine Radiallageranordnung an der radial inneren Getriebeeingangswelle radial gelagert oder lagerbar sein.

Sind die Kupplungsanordnungen jeweils mit einem integrierten, sich im Betrieb mitdrehenden hydraulischen Nehmerzylinder ausgeführt, über den die jeweilige Kupplungsanordnung auf hydraulischem Wege betätigbar ist, so kann ein Nehmerzylinderraum des zur Betätigung des radial inneren Lamellenpakets dienenden Nehmerzylinders zwischen dem Trägerabschnitt und einem Betätigungskolben des Nehmerzylinders ausgebildet sein. Betreffend den hydraulischen Nehmerzylinder der anderen Kupplungsanordnung wird vorgeschlagen, dass ein Nehmerzylinderraum des zur Betätigung des radial äußeren Lamellenpakets dienenden Nehmerzylinders zwischen einem die Eingangsnabe mit dem Lamellenhalteabschnitt des diesem Lamellenpakets zugehörigen Außenlamellenträgers koppelnden Mitnehmer und einem Betätigungskolben des Nehmerzylinders ausgebildet ist.

Nach einer vorteilhaften Weiterbildung ist die Eingangsnabe in die Zufuhr von Betriebsmedium bzw. für den Anschluss wenigstens eines der hydraulischen Nehmerzylinder an der zugeordneten Hydraulikdruckquelle einbezogen. Auf Grundlage des Vorschlags, dass die Eingangsnabe einen oder mehrere Kanäle für Hydraulikmedium bzw. Betriebsmedium aufweist, werden vielfältige Möglichkeiten für die Zufuhr von Betriebsmedium bzw. für die hydraulische Anbindung der Nehmerzylinder an der zugeordneten Hydraulikdruckquelle eröffnet, die dem Konstrukteur zusätzliche Freiheitsgrade hinsichtlich der Struktur und Auslegung der Kupplungseinrichtung und deren Einzelkomponenten geben, und so indirekt weitere Vorteile möglich machen.

In der Eingangsnabe können vorteilhaft wenigstens zwei Hydraulikkanäle ausgebildet sein, über die beide Nehmerzylinder an einer zugeordneten Hydraulikdruckquelle angeschlossen oder anschließbar sind.

Weiterbildend wird vorgeschlagen, dass in einer die Getriebeeingangswellen umfassenden, radial geschachtelten Drehwellenanordnung wenigstens ein Hydraulikkanal zwischen zwei Drehwellen oder/und in einer als Hohlwelle ausgeführten Drehwelle verläuft oder/und dass in einer/der die Getriebeeingangswellen umfassenden, radial geschachtelten Drehwellenanordnung wenigstens ein Betriebsmediumkanal zwischen zwei Drehwellen oder/und in einer als Hohlwelle ausgeführten Drehwelle verläuft. Dabei kann zwischen zwei Drehwellen eine Trennhülse angeordnet sein, die zwei gesonderte Hydraulikkanäle oder einen Hydraulikkanal und einen Betriebsmediumkanal voneinander trennt.

Die Drehwellenanordnung kann eine sich durch die radial innere Getriebeeingangswelle erstreckende Nebenaggregat-Antriebswelle, ggf. Ölpumpenantriebswelle, umfassen. In diesem Fall ist die Nebenaggregat-Antriebswelle bevorzugt als Hohlwelle ausgeführt, durch die ein Hydraulikkanal oder ein Betriebsmediumkanal verlaufen kann.

Die in der Drehwellenanordnung ausgebildeten Kanäle dienen bevorzugt zumindest teilweise zur Zufuhr von Betriebsmedium zur Eingangsnabe bzw. zum Anschluss der Eingangsnabe an der Hydraulikdruckquelle. Anders ausgedrückt kann wenigstens ein in der Drehwellenanordnung verlaufender Betriebsmediumkanal oder/und wenigstens ein in der Drehwellenanordnung verlaufender Hydraulikkanal an wenigstens einem zugeordneten Kanal der Eingangsnabe angeschlossen oder anschließbar sein.

Einer bevorzugte Konkretisierung bzw. Weiterbildung des Erfindungsvorschlags zeichnet sich dadurch aus, dass eine zwischen der Eingangsnabe einerseits und der Drehwellenanordnung oder/und der Trennhülse andererseits wirksame Drehzuführungs-Dichtungsanordnung vorhanden ist, die wenigstens eine Hydraulikverbindung zwischen einem Hydraulikkanal der Eingangsnabe und einem in der Drehwellenanordnung verlaufenden Hydraulikkanal oder/und wenigstens eine Betriebsmediumverbindung zwischen einem Betriebsmediumkanal der Eingangsnabe und einem in der Drehwellenanordnung verlaufenden Betriebsmediumkanal abdichtet. Die entsprechenden Drehzuführungsdichtungen sind auf einem vergleichsweise kleinen Durchmesser wirksam, so dass im Falle einer im Betrieb auftretenden Relativverdrehung zwischen der Eingangsnabe einerseits und der Drehwellenanordnung bzw. der Trennhülse andererseits eine geringere Reibung und damit ein geringerer Verschleiß auftritt, so dass eine gute Dauerfestigkeit erreicht werden kann. Hierbei ist zu berücksichtigen, dass je nach Kupplungszustand der beiden Kupplungsanordnungen die eine oder/und die andere Getriebeeingangswelle mit der Eingangsnabe in Drehmitnahmeverbindung steht (ggf. tritt aufgrund von Kupplungsschlupf eine Differenzdrehzahl auf) und dass im Falle einer Ankopplung der Nebenaggregat-Antriebswelle an der Eingangsnabe diese ebenfalls in Drehmitnahmeverbindung stehen, insbesondere zur gemeinsamen Drehung gekoppelt sind. Insoweit tritt an den Drehzuführungsdichtungen nicht ständig eine Relativverdrehung entsprechend der Drehzahl der Abtriebswelle der Antriebseinheit auf, wodurch der Verschleiß drastisch reduziert wird.

Eine bevorzugte Ausführungsform zeichnet sich dadurch aus, dass in der Drehwellenanordnung ein radial äußerer Kanal zwischen der radial inneren Getriebeeingangswelle und der Trennhülse verläuft, ein radial mittlerer Kanal zwischen der Trennhülse und der Nebenaggregat-Antriebswelle verläuft und ein radial innerer Kanal in der als Hohlwelle ausgeführten Nebenaggregat-Antriebswelle verläuft. Vorzugsweise dienen der radial äußere und der radial mittlere Kanal jeweils als Hydraulikkanal und dient der radial innere Kanal als Betriebsmediumkanal.

Andere Ausführungsformen zeichnen sich dadurch aus, dass in der Drehwellenanordnung ein radial äußerer Kanal zwischen der radial äußeren Getriebeeingangswelle und der radial inneren Getriebeeingangswelle verläuft, ein radial mittlerer Kanal zwischen der radial inneren Getriebeeingangswelle und der Trennhülse oder der Nebenaggregat-Antriebswelle verläuft und ein radial innerer Kanal zwischen der Trennhülse und der Nebenaggregat-Antriebswelle oder in der als Hohlwelle ausgeführten Nebenaggregat-Antriebswelle verläuft. Bei einer Ausführungsform dient der radial äußere Kanal als Betriebsmediumkanal und dienen der radial mittlere Kanal und der radial innere Kanal jeweils als Hydraulikkanal. Bei einer anderen Ausführungsform dient der radial äußere Kanal als Hydraulikkanal, dient der radial mittlere Kanal als Betriebsmediumkanal und dient der radial innere Kanal als Hydraulikkanal.

Man kann vorteilhaft vorsehen, dass eine Betriebsmedium- oder Hydraulikverbindung zwischen dem radial äußeren Kanal und einem zugeordneten Kanal der Eingangsnabe durch einen Durchgang in einer auf der radial inneren Getriebeeingangswelle sitzenden Koppelnabe einer Ausgangsseite der dieser Getriebeeingangswelle zugeordneten Kupplungsanordnung verläuft.

Es ist nicht zwingend, dass für beide Nehmerzylinder der Anschluss an der zugeordneten Hydraulikdruckquelle unter Vermittlung der Eingangsnabe erfolgt bzw. das Betriebsmedium alleine oder überhaupt über die Eingangsnabe zugeführt wird. Man kann beispielsweise vorsehen, dass die radial äußere Getriebeeingangswelle und - sofern vorhanden - gegebenenfalls eine diese radial außen umgebende Lagerhülse wenigstens eine Durchgangsöffnung aufweist, durch die aus dem radial äußeren Kanal Betriebsmedium oder Hydraulikmedium nach radial außen führbar ist.

Die Erfindungsvorschläge gemäß dem ersten Aspekt der Erfindung können vorteilhaft auf Grundlage von Konstruktionen ausgeführt werden, wie sie im Folgenden angegeben werden, wobei diesen Konstruktionen aber jeweils eine eigenständige Erfindungsqualität zukommt und damit unabhängig von der Ausbildung der Eingangsnabe mit oder ohne wenigstens einem Kanal unter Schutz gestellt werden sollen.

Die Erfindung geht diesbezüglich aus von einer Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle zugeordnete erste Lamellen-Kupplungsanordnung und eine einer zweiten Getriebeeingangswelle zugeordnete zweite Lamellen-Kupplungsanordnung aufweist, wobei von den beiden Getriebeeingangswellen die eine sich durch die andere erstreckt und von einem ersten Lamellenpaket der ersten Kupplungsanordnung und einem zweiten Lamellenpaket der zweiten Kupplungsanordnung das eine das andere zumindest in einem axialen Überlappungsbereich radial außen umgibt, wobei eine Eingangsseite der Kupplungseinrichtung eine an einer Abtriebswelle der Antriebseinheit direkt oder indirekt angekoppelte oder ankoppelbare Eingangsnabe oder Eingangswelle (im Folgenden in der Regel nur als Eingangsnabe bezeichnet) aufweist, die mit einem Außenlamellenträger der ersten Kupplungsanordnung und einem Außenlamellenträger der zweiten Kupplungsanordnung in Drehmitnahmeverbindung steht, wobei die Außenlamellenträger jeweils einen sich bezogen auf eine Drehachse der Kupplungseinrichtung im Wesentlichen axial erstreckenden, als Eingangsseite der jeweiligen Kupplungsanordnung dienenden Lamellenhalteabschnitt und einen sich hieran nach radial innen anschließenden, mit dem Lamellenhalteabschnitt einstückigen oder daran fest angebrachten Trägerabschnitt aufweisen, und wobei ein jeweiliger Innenlamellenträger der ersten und zweiten Kupplungsanordnung, der als Ausgangsseite der betreffenden Kupplungsanordnung dient, mit der ersten bzw. zweiten Getriebeeingangswelle in Drehmitnahmeverbindung steht oder bringbar ist.

Eine derartige Doppelkupplungseinrichtung ist aus der schon erwähnten DE 100 04 179 A1 bekannt. Bei der bekannten "Doppelkupplung" erfolgt der Drehmomentfluss von der Antriebseinheit zu den Getriebeeingangswellen über die Eingangsnabe und einen damit drehfest verbundenen Mitnehmer, der mit dem Lamellenhalteabschnitt des Außenlamellenträgers der das radial äußere Lamellenpaket aufweisenden Kupplungsanordnung zur gemeinsamen Drehung gekoppelt ist. Von diesen Lamellenhalteabschnitt wird das Drehmoment über den sich nach radial innen anschließenden Trägerabschnitt des Lamellenträgers zu einer an der radial äußeren Getriebeeingangswelle vermittels von Radiallagern gelagerten Lagerhülse übertragen, die hierzu fest mit dem Trägerabschnitt verbunden ist. Mit der Lagerhülse ist ferner der Trägerabschnitt des Außenlamellenträgers der das radial innere Lamellenpaket aufweisenden Kupplungsanordnung drehfest verbunden, um den als Eingangsseite dienenden Lamellenhalteabschnitt dieses Außenlamellenträgers an der Eingangsnabe anzukoppeln. Es sind also ein den Außenlamellenträger der radial äußeren Kupplungsanordnung an der Eingangsnabe ankoppelnder Mitnehmer, einen den Lamellenhalteabschnitt der radial äußeren Kupplungsanordnung mit der Lagerhülse verbindender Außenlamellenträger-Trägerabschnitt und ein den Lamellenhalteabschnitt der radial inneren Kupplungsanordnung mit der Lagerhülse verbindender Außenlamellenträger-Trägerabschnitt vorhanden, die einen entsprechenden, durchaus beachtlichen axialen Bauraum einnehmen. Da die Lagerhülse das Drehmoment vom Außenlamellenträger der radial äußeren Kupplungsanordnung zum Außenlamellenträger der radial inneren Kupplungsanordnung überträgt, erfüllt die Lagerhülse eine unverzichtbare Funktion innerhalb der Kupplungseinrichtung, so dass auf dieses Bauteil bzw. ein anderes, diese Funktion stattdessen übernehmendes Bauteil nicht verzichtet werden kann, selbst wenn man hinsichtlich der Lagerung der Kupplungseinrichtung andere Wege beschreiten möchte.

Demgegenüber schlägt die Erfindung vor, dass wenigstens einer, vorzugsweise beide der Außenlamellenträger mit ihrem Trägerabschnitt derart an der Eingangsnabe angeschlossen oder anschließbar sind, dass der Momentenfluss von der Eingangsnabe zum Lamellenhalteabschnitt über den Trägerabschnitt verläuft.

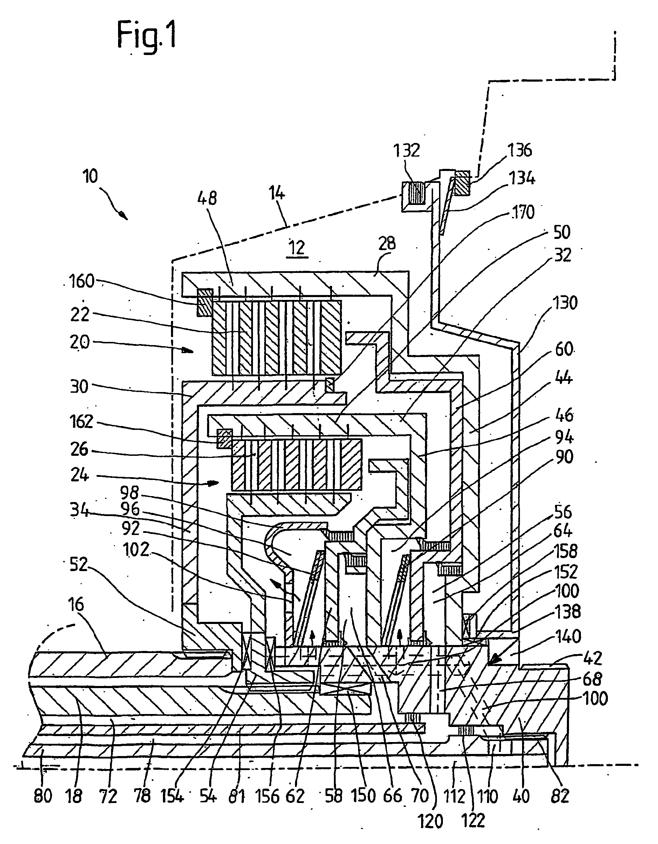

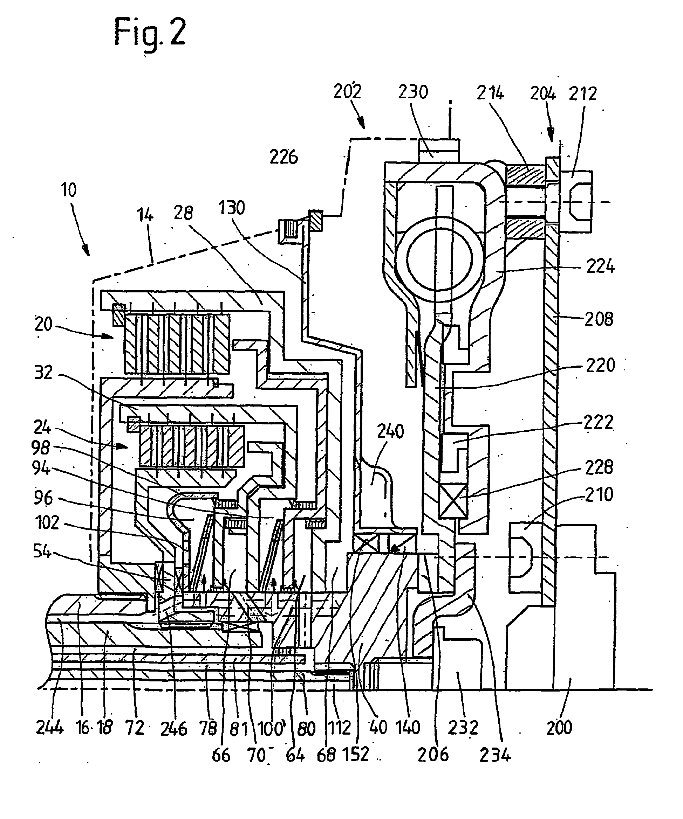

Die Funktion des Mitnehmers des Standes der Technik, den Außenlamellenträger der äußeren Lamellenkupplungsanordnung an der Eingangsnabe anzubinden, wird nach den nicht erfindungsgemäßen Ausführungen der Figuren 1 und 2 durch den Trägerabschnitt bzw. durch beide Trägerabschnitte erfüllt, so dass der Mitnehmer wegfallen kann und insoweit die Bauteilevielfalt, das Gewicht und der benötigte axiale Bauraum reduziert werden. Vorzugsweise sind die Lamellenhalteabschnitte der Außenlamellenträger der beiden Kupplungsanordnungen zueinander parallel an der Eingangsnabe angeschlossen, so dass für keine der beiden Kupplungsanordnungen der Momentenübertragungsweg zwischen dem jeweiligen Lamellenhalteabschnitt und der Eingangsnabe über den Lamellenhalteabschnitt des Außenlamellenträgers der anderen Kupplungsanordnung verläuft.

Es wird insbesondere daran gedacht, dass die Lamellenhalteabschnitte der Außenlamellenträger der beiden Kupplungsanordnungen jeweils über einen eigenen Trägerabschnitt an der Eingangsnabe angeschlossen sind, über den kein Momentenübertragungsweg zwischen der Eingangsnabe und dem Lamellenhalteabschnitt des Außenlamellenträgers der jeweils anderen Kupplungsanordnung verläuft. Gemäß diesem Weiterbildungsvorschlag übernimmt die Eingangsnabe gewissermaßen auch die Funktion, die beiden Außenlamellenträger zur gemeinsamen Drehung miteinander zu verbinden, die bei der vorstehend angesprochenen Konstruktion gemäß DE 100 04 179 A1 von der Lagerhülse übernommen ist. Soweit es um den Drehmomentenfluss in der Kupplungseinrichtung geht, kann auf die Lagerhülse deshalb verzichtet werden, wodurch wiederum die Bauteilevielfalt, das Gewicht und der benötigte Bauraum reduziert werden. Es wird insbesondere vorgeschlagen, dass die Lamellenhalteabschnitte der Außenlamellenträger der beiden Kupplungsanordnungen jeweils über einen eigenen Trägerabschnitt an der Eingangsnabe angeschlossen sind, über den kein Momentenübertragungsweg zwischen der Eingangsnabe und dem Lamellenhalteabschnitt des Außenlamellenträgers der jeweils anderen Kupplungsanordnung verläuft.

Der Trägerabschnitt bzw. wenigstens einer der Trägerabschnitte (vorzugsweise beide Trägerabschnitte) kann/können an der Eingangsnabe fest angebracht oder integral, ggf. einstückig, mit dieser ausgeführt sein.

Bei einer nicht erfindungsgemäßen Konstruktion ist vorgesehen, dass von den beiden Kupplungsanordnungen die das radial äußere Lamellenpaket aufweisende Kupplungsanordnung mit ihrem Innenlamellenträger an der radial äußeren Getriebeeingangswelle angeschlossen oder anschließbar ist und die das radial innere Lamellenpaket aufweisende Kupplungsanordnung mit ihrem Innenlamellenträger an der radial inneren Getriebeeingangswelle angeschlossen oder anschließbar ist.

Sind die Kupplungsanordnungen jeweils mit einem integrierten, sich im Betrieb mitdrehenden hydraulischen Nehmerzylinder ausgeführt, über den die jeweilige Kupplungsanordnung auf hydraulischem Wege betätigbar ist, so ist es bevorzugt, dass ein Nehmerzylinderraum des jeweiligen Nehmerzylinders zwischen dem Trägerabschnitt des jeweiligen Außenlamellenträger und einem Betätigungskolben des Nehmerzylinders ausgebildet ist.

Die Eingangsnabe kann über eine Radiallageranordnung an der radial inneren Getriebeeingangswelle radial gelagert oder lagerbar sein. Ferner kann die Kupplungseinrichtung unter Vermittlung des Innenlamellenträgers der das radial äußere Lamellenpaket aufweisenden Kupplungsanordnung sowie ggf. wenigstens eine Axiallageranordnung an der radial äußeren der Getriebeeingangswellen axial abgestützt oder abstützbar sein. Hierzu wird speziell vorgeschlagen, dass zwischen einem an der radial äußeren Getriebeeingangswelle angekoppelten oder ankoppelbaren Innenlamellenträger oder einer Koppelnabe desselben einerseits und einem an der radial inneren Getriebeeingangswelle angekoppelten oder ankoppelbaren Innenlamellenträger oder einer Koppelnabe desselben andererseits eine Axiallageranordnung wirksam ist. Eine weitere vorteilhafte Möglichkeit ist, dass zwischen einem an der radial inneren der Getriebeeingangswellen angekoppelten oder ankoppelbaren Innenlamellenträger oder einer Koppelnabe desselben einerseits und der Eingangsnabe andererseits eine Axiallageranordnung wirksam ist.

Wie schon angedeutet, kann es sich bei der genannten Kupplungseinrichtung um eine Kupplungseinrichtung handeln, die nach den Vorschlägen gemäß den Aspekten bezüglich der hydraulischen Ausbildungen ausgeführt ist. Demgemäß kann in der Eingangsnabe wenigstens ein Betriebsmediumkanal ausgebildet sein, über den wenigstens einer der Kupplungsanordnungen Betriebsmedium von einer Betriebsmediumversorgung zuführbar ist, oder/und kann in der Eingangsnabe wenigstens ein Hydraulikkanal ausgebildet sein, über den wenigstens einer der Nehmerzylinder an einer zugeordneten Hydraulikdruckquelle angeschlossen oder anschließbar ist.

Wie oben angedeutet, kann die erfindungsgemäße Kupplungseinrichtung gemäß dem Erfindungsvorschlag nach den Vorschlägen gemäß dem Aspekt der hydraulischen Ausbildungen ausgeführt sein. Demgemäß kann in der Eingangsnabe wenigstens ein Betriebsmediumkanal ausgebildet sein, über den wenigstens einer der Kupplungsanordnungen Betriebsmedium von einer Betriebsmediumversorgung zuführbar ist oder/und kann in der Eingangsnabe wenigstens ein Hydraulikkanal ausgebildet sein, über den wenigstens einer der Nehmerzylinder an einer zugeordneten Hydraulikdruckquelle angeschlossen oder anschließbar ist.

Den vorstehend zu den erfindungsgemäßen Kupplungseinrichtungen nach dem verschiedenen Aspekten gemachten Weiterbildungsvorschlägen kommt jeweils auch eigenständige Erfindungsqualität vor, für die es sich die Anmelderin vorbehält, unabhängige Ansprüche aufzustellen. Von besonderer Bedeutung ist der Vorschlag, dass die Eingangsnabe bzw. Eingangswelle über eine Radiallageranordnung an der radial inneren der beiden Getriebeeinganswellen radial gelagert oder lagerbar ist. Demgemäß schlägt die Erfindung nach einem weiteren Aspekt vor für eine Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle zugeordnete erste Lamellen-Kupplungsanordnung und eine einer zweiten Getriebeeingangswelle zugeordnete zweite Lamellen-Kupplungsanordnung aufweist, wobei von den beiden Getriebeeingangswellen die eine sich durch die andere erstreckt und von einem ersten Lamellenpaket der ersten Kupplungsanordnung und einem zweiten Lamellenpaket der zweiten Kupplungsanordnung das eine das andere zumindest in einem axialen Überlappungsbereich radial außen umgibt, wobei eine Eingangsseite der Kupplungseinrichtung eine an einer Abtriebswelle der Antriebseinheit direkt oder indirekt angekoppelte oder ankoppelbare Eingangsnabe oder Eingangswelle aufweist, die mit einem Außenlamellenträger der ersten Kupplungsanordnung und einem Außenlamellenträger der zweiten Kupplungsanordnung in Drehmitnahmeverbindung steht, und wobei ein jeweiliger Innenlamellenträger der ersten und zweiten Kupplungsanordnung, der als Ausgangsseite der betreffenden Kupplungsanordnung dient, mit der ersten bzw. zweiten Getriebeeingangswelle in Drehmitnahmeverbindung steht oder bringbar ist, dass die Eingangsnabe bzw. Eingangswelle über eine Radiallageranordnung an der radial inneren der beiden Getriebeeingangswellen radial gelagert oder lagerbar ist.

Von großer Bedeutung ist auch die Ausbildung von Kanälen in der Drehwellenanordnung. Demgemäß schlägt die Erfindung nach einem nächsten Aspekt vor für eine Mehrfach-Kupplungseinrichtung, ggf. Doppel-Kupplungseinrichtung für die Anordnung in einem Antriebsstrang eines Kraftfahrzeugs zwischen einer Antriebseinheit und einem Getriebe, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung aufweist, wobei von den beiden Getriebeeingangswellen die eine sich durch die andere erstreckt, wobei eine Eingangsseite der Kupplungseinrichtung eine an einer Abtriebswelle der Antriebseinheit direkt oder indirekt angekoppelte oder ankoppelbare Eingangsnabe oder Eingangswelle aufweist, die mit einer Eingangsseite der ersten Kupplungsanordnung und einer Eingangsseite der zweiten Kupplungsanordnung, in Drehmitnahmeverbindung steht, und wobei die Kupplungsanordnungen jeweils mit einem integrierten, sich im Betrieb mitdrehenden hydraulischen Nehmerzylinder ausgeführt sind, über den die jeweilige Kupplungsanordnung auf hydraulischem Wege betätigbar ist, oder/und die Kupplungsanordnungen für ein Laufen unter Einwirkung eines Betriebsmediums vorgesehen, insbesondere als nasslaufende Lamellen-Kupplungsanordnungen ausgeführt sind, dass in einer die Getriebeeingangswellen umfassenden, radial geschachtelten Drehwellenanordnung wenigstens ein Hydraulikkanal zwischen zwei Drehwellen oder/und in einer als Hohlwelle ausgeführten Drehwelle verläuft oder/und dass in einer/der die Getriebeeingangswellen umfassenden, radial geschachtelten Drehwellenanordnung wenigstens ein Betriebsmediumkanal zwischen zwei Drehwellen oder/und in einer als Hohlwelle ausgeführten Drehwelle verläuft. Dabei kann zwischen zwei Drehwellen eine Trennhülse angeordnet sein, die zwei gesonderte Hydraulikkanäle oder einen Hydraulikkanal und einen Betriebsmediumkanal voneinander trennt.

Eine vorteilhafte Anwendung der Erfindung betrifft einen Antriebsstrang, umfassend eine Antriebseinheit, ggf. in Form einer Brennkraftmaschine, ein Getriebe, ggf. Lastschaltgetriebe, mit wenigstens zwei Getriebeeingangswellen und eine dazwischen in einem von einer Getriebegehäuseglocke definierten Aufnahmeraum angeordnete Mehrfach-Kupplungseinrichtung, ggf. Doppel-Kupplungseinrichtung, vorzugsweise nach wenigstens einem anderen Aspekt der Erfindung, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung aufweist, wobei von den beiden Getriebeeingangswellen die eine sich durch die andere erstreckt, wobei eine Eingangsseite der Kupplungseinrichtung eine an einer Abtriebswelle der Antriebseinheit direkt oder indirekt angekoppelte oder ankoppelbare Eingangsnabe oder Eingangswelle aufweist, die mit einer Eingangsseite der ersten Kupplungsanordnung und einer Eingangsseite der zweiten Kupplungsanordnung in Drehmitnahmeverbindung steht, wobei der Aufnahmeraum in Richtung zur Antriebseinheit von einer gegebenfalls deckelartigen Wandung verschlossen ist, die eine der Eingangsnabe bzw. Eingangswelle zugeordnete Öffnung aufweist. Für diesen Kraftfahrzeug-Antriebsstrang wird im Hinblick auf eine leichte Einbaubarkeit der Kupplungseinrichtung, die ggf. in Form einer vormontierten Baueinheit vorliegt, vorgeschlagen, dass die Kupplungseinrichtung unter Vermittlung der Wandung in Richtung zur Antriebseinheit abgestützt ist, und dass die Wandung durch eine die Wandung in Richtung zum Getriebe vorspannende Federanordnung, gegebenenfalls Federring- oder Tellerfederanordnung, an der Getriebegehäuseglocke abgestützt ist. Durch die Federanordnung kann auf einfache Weise ein effektiver Toleranzausgleich erreicht werden.

Die Erfindung wird im Folgenden anhand von in den Figuren gezeigten Ausführungsbeispielen näher erläutert.
- Fig. 1: zeigt in einer geschnittenen Darstellung eine in einem An- triebsstrang eines Kraftfahrzeugs zwischen einem Getriebe und einer Antriebseinheit (nicht dargestellt) angeordnete nicht erfindungsgemäße Doppelkupplung mit zwei nasslaufenden Lamellen-Kupplungsanordnungen, die auf hydraulischem Wege betätigbar sind.
- Fig. 2: zeigt eine Ausführungsvariante der Doppelkupplung der Fig. 1 samt einer eine Eingangsseite der Doppelkupplung mit einem Koppelende einer Abtriebswelle der Antriebseinheit verbindenden Torsionsschwingungsdämpferanordnung.
- Fig.3: zeigt ein Ausführungsbeispiel einer erfindungsgemäßen Doppelkupplung.

Fig. 1 zeigt eine sogenannte Doppelkupplung 10, die in einem Aufnahmeraum 12 einer Getriebegehäuseglocke 14 eines sogenannten Lastschaltgetriebes mit zwei radial geschalteten Getriebeeingangswellen 16 und 18 angeordnet ist, die in den Aufnahmeraum vorstehen. Der Getriebeeingangswelle 16 können beispielsweise die Getriebegänge 2, 4 und 6 und der Getriebeeingangswelle 18 können beispielsweise die Getriebegänge 1, 3 und 5 sowie R (Rückwärtsgang) zugeordnet sein.

Die Doppelkupplung weist eine radial äußere Kupplungsanordnung 20 mit einem Lamellenpaket 22 und eine radial innere Lamellenkupplungsanordnung 24 mit einem Lamellenpaket 26 auf. Die Außenlamellen des Lamellenpakets 22 werden durch einen Außenlamellenträger 28 zur gemeinsamen Drehung mit diesem gehalten. Die Innenlamellen dieses Lamellenpakets 22 werden durch einen Innenlamellenträger 30 zur gemeinsamen Drehung mit diesem gehalten. Die Außenlamellenträger des Lamellenpakets 26 werden durch einen Außenlamellenträger 32 zur gemeinsamen Drehung mit diesem gehalten. Die Innenlamellen dieses Lamellenpakets 22 werden durch einen Innenlamellenträger 34 zur gemeinsamen Drehung mit diesem gehalten. Das Lamellenpaket 22 umschließt radial außen das Lamellenpaket 26.

Antriebsmoment von der Antriebseinheit wird in eine Eingangsnabe 40 der Doppelkupplung eingeleitet, und zwar über Mitnahmeformationen 42, ggf. eine Steckverzahnung 42, der Eingangsnabe 40. Das Antriebsmoment kann über eine Torsionsschwingungsdämpferanordnung oder Zwei-Massen-Schwungrad-Anordnung auf die Eingangsnabe übertragen werden (vgl. DE 100 04 179 A1).

An der Eingangsnabe sind die beiden Außenlamellenträger 28 und 32 zur gemeinsamen Drehung angebracht. Hierzu weisen die Außenlamellenträger jeweils einen sich in radialer Richtung erstreckenden Trägerabschnitt 44 bzw. 46 auf (der beispielsweise an der Eingangsnabe angeschweißt ist), an den sich in einem radial äußeren Bereich ein jeweiliger, sich im Wesentlichen axial erstreckender Lamellenhalteabschnitt 48 bzw. 50 anschließt. Je nach Einkuppelzustand der beiden Kupplungsanordnungen wird das Drehmoment dann über das betreffende Lamellenpaket auf den Innenlamellenträger 30 bzw. 34 und von diesem auf die dem Innenlamellenträger 30 zugeordnete Getriebeeingangswelle 16 bzw. auf die dem Innenlamellenträger 34 zugeordnete Getriebeeingangswelle 18 übertragen. Hierzu weisen die Innenlamellenträger jeweils eine Koppelnabe 52 bzw. 54 auf, die auf der zugeordneten Getriebeeingangswelle sitzt und über Mitnahmeformationen mit dieser zur gemeinsamen Drehung verbunden ist.

Die beiden Kupplungsanordnungen werden in einen jeweiligen, in die Doppelkupplung integrierten, sich im Betrieb mitdrehenden hydraulischen Nehmerzylinder 56 bzw. 58 betätigt, die einen Betätigungskolben 60 bzw. 62a aufweisen. Eine jeweilige Druckkammer 64 bzw. 66 des jeweiligen Nehmerzylinders ist über wenigstens einen in der Eingangsnabe 40 ausgeführten Hydraulikkanal 68 bzw. 70 und sich daran anschließende Ringkanäle 72 bzw. 78 zwischen der Getriebeeingangswelle 18 und einer radial innerhalb derselben verlaufenden Ölpumpenantriebswelle 80 an einer zugeordneten Hydraulikdruckquelle, beispielsweise eine Steuer/Regel-Ventilanordnung, angeschlossen. Die beiden Ringkanäle 72 und 78 sind durch eine Trennhülse 81 voneinander getrennt. Zur Pumpenantriebswelle 80 ist noch zu sagen, dass diese über Mitnahmeformationen 82 mit der Eingangsnabe 40 zur gemeinsamen Drehung verbunden ist.

Bei den beiden Kupplungsanordnungen handelt es sich um Kupplungsanordnungen des NORMALERWEISE-OFFEN-Typs. Hierzu sind von Tellerfedern oder dergleichen gebildete Rückstellfederanordnungen 90 und 92 vorgesehen, die vorliegend in einer jeweiligen, dem Betätigungskolben 60 bzw. 62 zugeordneten Fliehkraftdruckausgleichskammer 94 bzw. 96 aufgenommen sind. Die Fliehkraftdruckausgleichskammer 94 ist zwischen dem Betätigungskolben 60 und dem Außenlamellenträger 46 ausgebildet. Die Fliehkraftdruckausgleichskammer 96 ist zwischen dem Betätigungskolben 62 und einer an der Eingangsnabe 40 angebrachten Wandung 98 ausgebildet. In Fig. 1 sind verschiedene, den Druckkammern und den Fliehkraftdruckausgleichskammern zugeordnete Dichtungen eingezeichnet, deren Funktion sich dem Fachmann aus der Zeichnung unmittelbar erschließt. Zur Funktion der Fliehkraftdruckausgleichskammern wird auf die DE 100 04 179 A1 verwiesen.

Den Fliehkraftdruckausgleichskammern 94 und 96 werden über eine in der Eingangsnabe 40 ausgebildete Kühlölkanalanordnung 100 mit Kühlöl von einer Kühlölversorgung, beispielsweise der erwähnten Ölpumpe, versorgt, das die jeweilige Fliehkraftdruckausgleichskammer füllt und insoweit fliehkraftbedingten Hydraulikdruckerhöhungen in der jeweiligen Druckkammer, die auf den jeweiligen Betätigungskolben wirken, entgegenwirkt. Aus der Druckausgleichskammer 96 entweicht im Betrieb ein Kühlölstrom durch eine Öffnung 102 in der Wandung 98. Eine andere Möglichkeit, die zusätzlich oder alternativ realisiert sein kann, ist, dass das Kühlöl aus der Kühlölkanalanordnung im getriebeseitigen axialen Endbereich der Eingangsnabe 40 aus dieser austritt und zwischen dem Innenlamellenträger 34 und der Wandung 98 nach radial außen fließt. In den Lamellenhalteabschnitten sind Durchtrittsöffnungen für das Kühlöl vorgesehen, so dass Kühlöl zwischen die Lamellen der Lamellenpakete eintreten und die Lamellen kühlen kann.

Die Kühlölkanalanordnung 100 in der Eingangsnabe 40 ist über wenigstens eine Radialbohrung 110 im antriebseinheitsseitigem Endbereich der Pumpenantriebswelle 80 an einem darin ausgebildeten Kühlölkanal 112 angeschlossen.

Zur Abdichtung der verschiedenen Hydraulik- und Kühlölwege gegeneinander steht die Eingangsnabe 40 einerseits über einen Radialwellendichtring 120 oder dergleichen mit der Trennhülse 81 und andererseits über einen Radialwellendichtring 122 oder dergleichen mit der Ölpumpenantriebswelle 80 in Dichteingriff, so dass der Hydraulikbetätigungsweg 70, 72 gegenüber dem Hydraulikbetätigungsweg 68, 78 abgedichtet ist und der Hydraulikbetätigungsweg 68, 78 gegenüber dem Kühlölversorgungsweg 100, 112 abgedichtet ist.

Im Betrieb muss der Radialwellendichtring 120 die Drehung der Eingangsnabe 40 gegenüber der stationären Trennhülse 81 aushalten. Da der Radialwellendichtring auf einem vergleichsweise kleinen Radius wirksam ist, ist er relativ geringem Verschleiß ausgesetzt.

Ein die Doppelkupplung 10 enthaltender Teil des Aufnahmeraums 12 dient als Nassraum und ist durch eine deckelartige Verschlusswandung 130, die eine Zentralöffnung für die Eingangsnabe 40 aufweist, in Richtung zur Antriebseinheit verschossen. 132 bezeichnet einen Dichtring, und die im Folgenden nur als Deckel bezeichnete Verschlusswandung 130 ist durch einen Federring 134 gesichert, der sich an einem an der Gehäuseglocke 14 eingesetzten Sicherungsring 136 abstützt. Zwischen einem radial inneren Flansch 138 und der Eingangsnabe 40 ist eine Dichtungsanordnung 140 wirksam.

Die Doppelkupplung 10 ist vermittels ihrer Eingangsnabe 40 über ein Radiallager 150 an der radial inneren Getriebeeingangswelle 18 sowie über ein Radiallager 152 am Ringflansch 138 radial gelagert. Axial ist die Doppelkupplung vermittels ihrer Eingangsnabe 40 über zwei Axiallager 154 und 156 sowie die Koppelnaben 52 und 54 an der radial äußeren Getriebeeingangswelle 16 in Richtung zum Getriebe abgestützt. In Richtung zum Motor ist die Doppelkupplung 10 über ein Axiallager 158 am Deckel 130 abgestützt. Der als Tellerfeder ausgeführte Federring 134 sorgt dabei für einen Toleranzausgleich.

Weitere Einzelheiten, die Bedeutung und Funktion einzelner Komponenten des Ausführungsbeispiels usw. sind dem Fachmann aus Fig. 1 ohne Weiteres verständlich. So bezeichnen 160 und 162 am Außenlamellenträger 28 bzw. 32 angebrachte Halte- oder Sicherungsringe, die die Außenlamellen am jeweiligen Außenlamellenträger 28 bzw. 32 sichern und die axialen Betätigungskräfte beim Einrücken der jeweiligen Kupplungsanordnung aufnehmen. Beim gezeigten Beispiel sind die Außenlamellen vergleichsweise massiv als reibbelaglose Lamellen ausgeführt, und die Innenlamellen sind als Belaglamellen ausgeführt. Zu vorteilhaften Ausgestaltungen der Lamellenpakete wird beispielsweise auf die DE 100 04 179 A1 verwiesen, die dem Fachmann auch weitere, das Verständnis der Konstruktion gemäß Fig. 1 erleichternde Hintergrundinformation gibt.

Die Doppelkupplung 10 kann beispielsweise wie folgt aus Einzelteilen zusammengebaut und in einem Kraftfahrzeug-Antriebsstrang montiert werden. Zuerst wird der Außenlamellenträger 28 der radial äußeren Kupplungsanordnung mit der auch als Zentralnabe bezeichenbaren Eingangsnabe 40 verbunden, z. B. durch Schweißen. Es wird dann der Kolben 60 für die radial äußere Kupplungsanordnung zusammen mit seinen Rückstellfedern 90 und den zugehörigen Dichtungen eingelegt. Dann wird der Außenlamellenträger 32 der radial inneren Kupplung mit der Eingangsnabe 40 verbunden, beispielsweise angeschweißt. Es werden dann der Kolben 62 der radial inneren Kupplungsanordnung samt den zugehörigen Rückstellfedern 92 und den zugehörigen Dichtungen eingelegt. Hiernach wird dann zweckmäßig die Wandung 98 des Ausgleichraums 96 für die radial innere Kupplung an der Eingangsnabe 40 angebracht, beispielsweise angeschweißt. Sofern noch nicht angeordnet, kann nun das Radiallager 150 eingesetzt werden. Als nächstes kann der Innenlamellenträger 34 der radial inneren Kupplungsanordnung samt dem Axiallager 156 eingelegt werden. Daraufhin können dann die Außen- und Innenlamellen der radial inneren Kupplungsanordnung, also das Lamellenpaket 26 eingelegt und durch den Sicherungs- oder Haltering 162 gesichert werden. Anschließend wird zweckmäßig der Innenlamellenträger 30 der radial äußeren Kupplungsanordnung samt dem Axiallager 154 eingelegt. Daraufhin können dann die Außen- und Innenlamellen der radial äußeren Kupplungsanordnung, also das Lamellenpaket 22, eingelegt und durch den Sicherungs- oder Haltering 160 gesichert werden.

Die erfindungsgemäße Doppelkupplung 10 gemäß Fig. 1 kann als fertiges Modul in der Getriebegehäuseglocke 14 montiert werden. Hierzu wird vorzugsweise das Getriebe in eine Position gebracht, in der die Getriebegehäuseglocke 14 nach oben offen ist, so dass die Doppelkupplung 10 von oben axial in den Aufnahmeraum 12 abgesenkt und dabei auf die Drehwellenanordnung 16, 18, 80 abgesenkt werden kann. Damit bei dieser Montage die Innenlamellenträger nicht herausrutschen können, ist am Innenlamellenträger 30 ein Sicherungsring 170 angebracht, beispielsweise durch Verstemmen am Innenlamellenträger fixiert. Die zwischen den Drehwellen 16, 18 und 80 und der Eingangsnabe 40 wirkende Radiallager- und Dichtungsanordnung (Radiallager 150, Radialwellendichtring 120, 122 sind vorzugsweise an der Doppelkupplungsbauweise 10 vormontiert und auf geeignete Weise fixiert, so dass die Doppelkupplung mit geringem Zeitaufwand getriebeseitig montiert werden kann und die Gefahr einer Fehlmontage oder nicht vollständigen Montage reduziert ist.

Nach dem Aufschieben der Doppelkupplung auf die Drehwellen 16, 18, 80 ist dann noch der Deckel 130 einzubauen und durch die Komponenten 134, 136 zu sichern. Die Lager 152 und 158 können zweckmäßig am Modul vormontiert sein.

Der in Fig. 2 gezeigte Antriebsstrang weist zwischen einem Doppelkupplungsgetriebe, von dem nur die Getriebegehäuseglocke 14 und die Getriebeeingangswellen 16 und 18 zu sehen sind, und einer beispielsweise als Brennkraftmaschine (Verbrennungsmotor) ausgeführten Antriebseinheit, von der nur ein Koppelende 200 ihrer Abtriebswelle (ggf. Kurbelwelle) zu sehen ist, eine Doppelkupplung 10, einen Torsionsschwingungsdämpfer 202 und eine Koppelanordnung 204 auf. Die Doppelkupplung 10 entspricht weitgehend der Doppelkupplung 10 des Ausführungsbeispiels der Fig. 1, so dass auf die Ausführungen zu Fig. 1 verwiesen werden kann. Unterschiede zwischen den beiden Ausführungsbeispielen werden im Folgenden erläutert.

Die als Eingangsseite der Doppelkupplung 10 fungierende Kupplungs- oder Eingangsnabe 40 ist über eine sogenannte Hirth-Verzahnung 206 mit der Ausgangsseite des Torsionsschwingungsdämpfers 202 gekoppelt. Im vorliegenden Fall handelt es sich bei dem Torsionsschwingungsdämpfer 202 um einen Torsionsschwingungsdämpfer des Zwei-Massen-Schwungrad- oder ZMS-Typs, und zwar speziell um ein sogenanntes Planetenrad-Zwei-Massen-Schwungrad. Die Eingangsseite des Torsionsschwingungsdämpfers 252 ist über eine Flexplatte 208 der Koppelanordnung 204 am Koppelende 200 der Abtriebswelle (insbesondere Kurbelwelle) der Antriebseinheit angebunden. 210 bezeichnet eine die Flexplatte 208 am Koppelende 200 befestigende Schraube. 212 bezeichnet eine die Flexplatte 208 an der Eingangsseite des Torsionsschwingungsdämpfers befestigende Schraube, die in ein an einem Blech der Eingangsseite angeschweißtes Klötzchen 214 eingeschraubt ist. In Umfangsrichtung folgen mehrere derartige Schrauben und Klötzchen aufeinander.

Das Zwei-Massen-Schwungrad 202 weist ein ZMS-Hohlrad 220, ZMS-Planetenräder 222 und einen Planetenradträger 224 auf. Der Planetenradträger 224 dient als Eingangsseite und das Hohlrad 220 dient als Ausgangsseite des Torsionsschwingungsdämpfers. Zwischen Eingangsseite und Ausgangsseite ist eine Dämpferelementenanordnung 226 wirksam. 228 bezeichnet ein Axiallager des Zwei-Massen-Schwungrads, über das sich das Hohlrad 220 am Planetenradträger 224 abstützt.

Radial außen trägt die Eingangsseite des ZMS 202 eine Zusatz-Drehmasse 230, die vorliegend mit einem Anlasser-Zahnkranz ausgeführt ist.

Der Drehmomentenfluss von der Antriebseinheit zu den angetriebenen Rädern des Kraftfahrzeugs geht von der Abtriebswelle, genauer deren Koppelende 200 auf die Flexplatte 208, dann auf die Eingangs- oder Primärseite 224 des Zwei-Massen-Schwungrads 202, dann über das Hohlrad 220 unter Vermittlung der Hirth-Verzahnung 206 auf die Eingangsnabe 40, und von dieser auf die Außenlamellenträger 28 und 32, wie im Zusammenhang mit dem Ausführungsbeispiel der Fig. 1 erläutert wurde. Der Drehkoppeleingriff der Hirth-Verzahnung 206 wird unter Vermittlung einer auf die Verzahnung wirkenden Axialkraft aufrecht erhalten, die von einer in die Eingangsnabe 40 eingeschraubten Zentralschraube 232 aufgebracht wird, die über ein topfförmiges Element 234 einen radial inneren Hirth-Verzahnungs-Koppelbereich des Hohlrads 220 gegen einen zugeordneten Hirth-Verzahnungs-Koppelbereich der Kupplungsnabe 40 drückt.

Wie die Konstruktion der Fig. 1 bietet die Konstruktion der Fig. 2 den Vorteil, dass die Doppelkupplung 10 einschließlich der Eingangsnabe 40 als vormontierte Baueinheit als vormontiertes Modul anlieferbar und in einer Gehäuseglocke eines Getriebes bzw. in einem Antriebsstrang montierbar ist. Diese Baueinheit wird auf die Getriebeeingangswellen 16, 18 und - sofern vorgesehen - die Pumpenantriebswelle 80 aufgeschoben. Gemäß Fig. 2 ist die Doppelkupplung 10 im fertiggestellten Antriebsstrang unter Vermittlung des Torsionsschwingungsdämpfers 202 und der Flexplatte 208 an der Abtriebswelle bzw. deren Koppelende 200 in Richtung zur Antriebseinheit axial abgestützt bzw. abstützbar. Demgemäß ist keine axiale Abstützung der Doppelkupplung 10 am Deckel 130 vorgesehen, so dass als zwischen dem Deckel 130 und der Eingangsnabe wirksames Lager nur das Radiallager 152 vorhanden ist. Um eine Anstauung von Kühlöl zwischen dem Radiallager 152 und der Dichtung 140 zu verhindern, weist der Deckel wenigstens eine Ausdrückung 240 auf, über die Kühlöl aus dem Ringzwischenraum zwischen dem Radiallager 152 und der Dichtung 140 in den Nassraum abfließen kann.

Die Druckkammern 64 und 66 der beiden in die Doppelkupplung 10 integrierten hydraulischen Nehmerzylinder sind wie bei der Konstruktion der Fig. 1 über Bohrungen bzw. Kanäle in der Eingangsnabe 40 und durch die Trennhülse 81 voneinander getrennte Kanäle 72 und 78 an der zugeordneten Steuer/Regel-Ventilanordnung oder dergleichen angeschlossen. Das Kühlöl wird bei der Konstruktion der Fig. 2 über einen Ringkanal 244 zwischen den beiden Getriebeeingangswellen 16 und 18 zugeführt, und zwar durch wenigstens einen Zufuhr-Durchgang 246 in der Koppelnabe 54. Das durch den Durchgang bzw. die Durchgänge 246 hindurchtretende Kühlöl tritt in eine Kühlölkanalanordnung 100' der Eingangsnabe 40 ein und wird durch diese Kühlölkanalanordnung (beispielsweise gebildet von einer oder mehreren Axialbohrungen und zu den Fliehkraftdruckausgleichskammern führenden Radialbohrungen) in die Fliehkraftdruckausgleichskammern 94 und 96 zugeführt. Wie bei der Konstruktion der Fig. 1 tritt aus der Ausgleichskammer 96 ein Kühlölstrom durch eine oder mehrere Öffnungen 102 in der Wandung 98 aus und dann in die innere Kupplungsanordnung 24 und danach in die äußere Kupplungsanordnung 20 ein.

In Fig. 2 ist die Pumpenantriebswelle 80 wiederum als Hohlwelle dargestellt. Die Ausführung dieser Antriebswelle als Hohlwelle ist aber nicht erforderlich, da der darin ausgebildete Kanal (Kanal 112 in Fig. 1) beim vorliegenden Ausführungsbeispiel nicht benutzt wird. Man könnte die Antriebswelle 80 also als Vollwelle ausführen. Alternativ könnte man aber auf die Trennhülse 81 verzichten und stattdessen beispielsweise die Druckkammer 66 über einen Ringkanal zwischen der Getriebeeingangswelle 18 und der Pumpenantriebswelle 80 ansteuern und die Druckkammer 64 über den Kanal 112 in der Pumpenantriebswelle 80 ansteuern. Hierzu wäre nur ein Radialwellendichtring oder dergleichen zwischen der Eingangsnabe 40 und der Pumpenantriebswelle 80 im Axialbereich zwischen den Kanälen bzw. Bohrungen 68 und 70 erforderlich, und man müsste die Pumpenantriebswelle 80 mit zugeordneten Radialbohrungen oder dergleichen ausführen, um den Kanal 112 an den Bohrungen 68 anzuschließen.

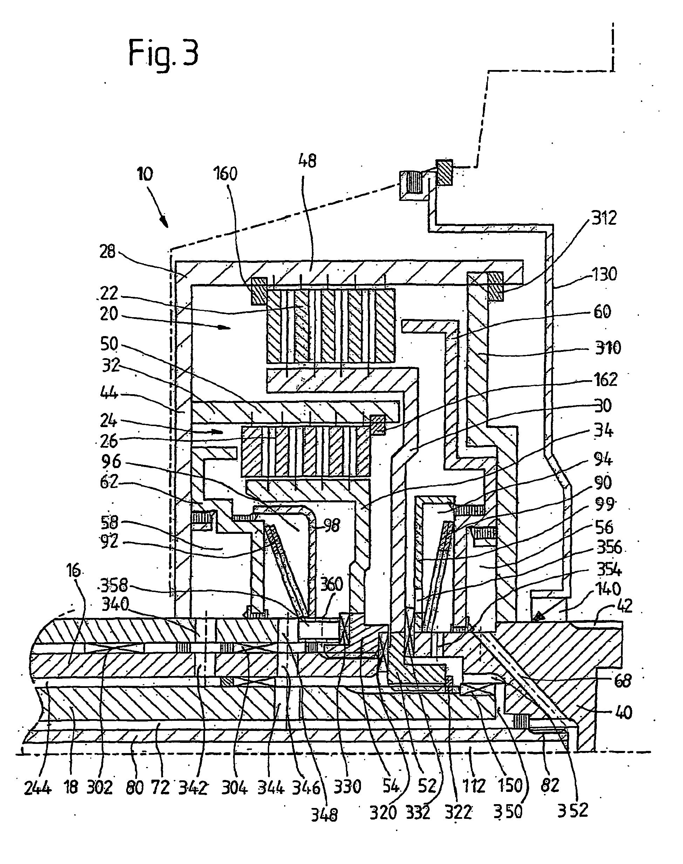

Die Konstruktion der Fig. 3 hat einerseits gewisse Gemeinsamkeiten mit einer bekannten Doppelkupplungskonstruktion der Anmelderin gemäß DE 100 04 179 A1 und andererseits viele Gemeinsamkeiten mit der hier vorgestellten Konstruktion gemäß Fig. 1. Die Doppelkupplung 10 der Fig. 3 ist mittels eines Ring- oder Hülsenteils 300, das im Folgenden kurz als Lagerhülse bezeichnet wird, an der radial geschachtelten Getriebeeingangswellenanordnung, genauer unter Vermittlung von zwei Radiallagern 302 und 304 an der radial äußeren Getriebeeingangswelle 16 radial gelagert.

An der Lagerhülse 300 ist ein den beiden Kupplungsanordnungen 20 und 24 gemeinsam zugehöriger Außenlamellenträger-Trägerabschnitt 44 angebracht (beispielsweise angeschweißt), der mit dem Lamellenhalteabschnitt 48 der radial äußeren Kupplungsanordnung 20 einteilig ist und an dem der Lamellenhalteabschnitt 50 der radial inneren Kupplungsanordnung 24 dauerhaft angebracht, beispielsweise angeschweißt, ist. Die Abschnitte 44 und 48 bilden gewissermaßen den Außenlamellenträger 28 der radial äußeren Kupplungsanordnung 20 und die Abschnitte 44 und 50 bilden gewissermaßen den Außenlamellenträger 32 der radial inneren Kupplungsanordnung 24.

Wie bei der bekannten Konstruktion gemäß DE 100 04 179 A1 wird das vermittels der Mitnahmeformationen 42 auf die Eingangsnabe 40 übertragene Antriebsmoment über einen Mitnehmer 310, der beispielsweise an der Eingangsnabe 40 angeschweißt ist, auf den Außenlamellenträger-Lamellenhalteabschnitt 48 der radial äußeren Kupplungsanordnung 20 übertragen. Der Mitnehmer 310 ist durch einen Sicherungsring 312 in Richtung zur Antriebseinheit am Abschnitt 48 axial gesichert.

Der Lamellenhalteabschnitt 48 bildet die Eingangsseite der radial äußeren Kupplungsanordnung 20. Die vom Lamellenhalteabschnitt 50 gebildete Eingangsseite der radial inneren Kupplungsanordnung 24 ist vermittels des Trägerabschnitts 44 zur Eingangsseite 48 parallel geschaltet. In Abweichung von der Konstruktion gemäß DE 100 04 179 A1 wird das Antriebsmoment von der Eingangsseite 48 zur Eingangsseite 50 nicht über die Lagerhülse 300 geführt.

Von den beiden Kupplungsanordnungen werden die Antriebsmomente, je nach Einkuppel- bzw. Auskuppelzustand der jeweiligen Kupplungsanordnung, über ihre Innenlamellenträger 30 und 34 auf die jeweils zugeordnete Getriebeeingangswelle 16 bzw. 18 übertragen, und zwar im Falle der in Fig. 3 gezeigten Konstruktion von dem Innenlamellenträger 30 der radial äußeren Kupplungsanordnung 20 vermittels der Koppelnabe 52 auf die radial innere Getriebeeingangswelle 18 und vom Innenlamellenträger 34 der radial inneren Kupplungsanordnung 24 vermittels der Koppelnabe 54 auf die radial äußere Getriebeeingangswelle 16. Der äußeren Getriebeeingangswelle 16 können beispielsweise die Getriebegänge 2, 4 und 6 und der inneren Getriebeeingangswelle können beispielsweise die Getriebegänge 1, 3, 5 und R zugeordnet sein.

Zur radialen Lagerung der Doppelkupplung 10 gemäß Fig. 3 ist noch auf ein Radiallager 150 zwischen der Eingangsnabe 40 und der radial inneren Getriebeeingangswelle 18 hinzuweisen. Axial stützt sich die Doppelkupplung 10 über ein Axiallager 320 zwischen der Koppelnabe 52 des Außenlamellenträgers 30 der radial äußeren Kupplungsanordnung und der äußeren Getriebeeingangswelle 16 an dieser in Richtung zum Getriebe ab. In Richtung zur Antriebseinheit ist die Doppelkupplung 10 über einen Sicherungsring 322, der den Innenlamellenträger 30 der radial äußeren Kupplungsanordnung sichert, an der Getriebeeingangswelle 18 abgestützt.

Die radial äußere Kupplungsanordnung 20 ist über einen in die Doppelkupplung integrierten hydraulischen Nehmerzylinder betätigbar, dessen Druckraum mit 56 und dessen Kolben mit 60 bezeichnet ist. Die Konstruktion ist insoweit ähnlich zu Konstruktion der Fig. 1, wobei der Druckraum 56 nun allerdings nicht durch den Außenlamellenträger, sondern durch den Mitnehmer 310 begrenzt ist.

Im entgegengesetzten axialen Endbereich der Doppelkupplung ist der der radial inneren Kupplungsanordnung 24 zugeordnete hydraulische Nehmerzylinder ausgebildet, der einen Druckraum 58 und einen Betätigungskolben 62 aufweist.

Den Druckräumen 56 und 58 ist jeweils eine Fliehkraftdruckausgleichskammer 94 bzw. 96 zugeordnet, die die jeweilige Rückstellfederanordnung 90 und 92 aufnimmt und vom jeweiligen Betätigungskolben 60 bzw. 62 und einer an der Eingangsnabe 40 bzw. an der Lagerhülse 300 angebrachten Wandung 98 bzw. 99 begrenzt ist.

Ein weiteres Radiallager 330 ist zwischen der Lagerhülse 300 und der Koppelnabe 54 des Innenlamellenträgers 34 vorgesehen. Ferner ist noch ein Axiallager 332 zwischen der Eingangsnabe 40 und der Koppelnabe 52 des Innenlameflenträgers 30 vorgesehen.

Die Druckkammer 56 ist über wenigstens einen, beispielsweise von einer Schrägbohrung gebildeten Hydraulikkanal 68 in der Eingangsnabe 40 und den Kanal 112 in der als Hohlwelle ausgebildeten Pumpenantriebswelle 80 an der zugeordneten Steuer/Regel-Ventilanordnung oder dergleichen angeschlossen. Die Druckkammer 58 ist über wenigstens eine Bohrung 340 in der Lagerhülse 340, wenigstens eine Bohrung 342 in der Getriebeeingangswelle 16 und den Ringkanal 244 zwischen den beiden Getriebeeingangswellen 16 und 18 an der zugeordneten Steuer/Regel-Ventilanordnung oder dergleichen angeschlossen. Das Kühlöl wird über den Ringkanal 72 zwischen der radial inneren Getriebeeingangswelle 18 und der Pumpenantriebswelle 80 zugeführt und tritt zum einen durch Radialbohrungen 344, 346 und 348 in die Fliehkraftdruckausgleichskammer 96 und zum anderen durch eine Ausdrehung 350, Radialnuten 352 und Radialbohrungen 354 in den Ausgleichskammer 94. Der resultierende Fliehkraft-Gegendruck in der Ausgleichskammer 94 ist durch eine oder mehrere Öffnung 356 in der Wandung 99 eingestellt, aus denen im Betrieb Kühlöl austritt und nach radial außen in Richtung zum Lamellenpaket 22 strömt.

Von dem durch die Bohrungen 344, 346, 348 nach radial außen strömenden Kühlöl wird durch eine oder mehrere Axialbohrungen 358 wenigstens ein Teilstrom abgezweigt, der durch eine oder mehrere Öffnungen 360 in den Zwischenraum zwischen der Wandung 98 und dem Innenlamellenträger 94 eintritt und zuerst das Lamellenpaket 26 und dann das Lamellenpaket 22 versorgt.

Es sollte noch erwähnt werden, dass man anstelle eines Torsionsschwingungsdämpfers oder dergleichen außerhalb des Deckels 130 im Trockenraum auch einen Torsionsschwingungsdämpfer im Nassraum anordnen und beispielsweise in die Doppelkupplung 10 integrieren kann. Beispielsweise könnte der Torsionsschwingungsdämpfer mit dem Mitnehmer 310 integriert sein. Hierbei könnte beispielsweise der Mitnehmer 310 die Mitnehmerscheibe eines Torsionsschwingungsdämpfers eines herkömmlichen Typs darstellen und die Abdeckbleche des Torsionsschwingungsdämpfers wären mit dem Lamellenhalteabschnitt 48, also mit dem Außenlamellenträger der radial äußeren Kupplungsanordnung 20, verbunden. Eine andere Möglichkeit ist, in wenigstens einen, vorzugsweise beide Innenlamellenträger 30 und 34 einen (jeweiligen) Torsionsschwingungsdämpfer zu integrieren.

Die Doppelkupplung 10 der Fig. 3 kann beispielsweise wie folgt dargestellt zusammengebaut und in einem Antriebsstrang montiert werden. Zuerst wird der Außenlamellenträger-Lamellenhalteabschnitt 50 der radial inneren Kupplungsanordnung am Trägerabschnitt 44 des Außenlamellenträgers 28 angebracht, beispielsweise angeschweißt. Hiernach kann der beiden Außenlamellenträgern zugeordnete Trägerabschnitt 44 an der Lagerhülse 300 angebracht, beispielsweise angeschweißt, werden. Hiernach kann der Kolben 62 der radial inneren Kupplungsanordnung samt zugeordneten Dichtungen und den Rückstellfedern 92 eingelegt werden, worauf dann die Wandung 98 an der Lagerhülse 300 angeschweißt werden kann. Hiernach kann zweckmäßig der Innenlamellenträger 34 der radial inneren Kupplungsanordnung samt dem Axiallager 330 eingelegt werden, worauf dann die Außen- und Innenlamellen des Lamellenpakets 26 eingelegt und durch den Sicherungsring 162 gesichert werden. Nach Einlegen des Innenlamellenträgers 30 der radial äußeren Kupplung samt den Axiallagern 332 und 320 können dann die Außen- und Innenlamellen des Lamellenpakets 22 eingelegt werden.

Hiervon unabhängig wird zuvor, parallel oder danach der Mitnehmer 310 mit der Eingangsnabe 40 verbunden, beispielsweise durch Schweißen. Es können dann der Betätigungskolben 60 samt zugeordneten Dichtungen und den zugeordneten Rückstellfedern 90 eingelegt werden. Anschließend wird die Wandung 99 an der Eingangsnabe 40 angeschweißt.

Als letzter wesentlicher Zusammenbauschritt wird die Eingangsnabe 40 samt dem Mitnehmer 310 in den Außenlamellenträger-Lamellenhalteabschnitt 48 der radial äußeren Kupplungsanordnung eingeschoben und dann durch den Sicherungsring 312 gesichert.

Bei der Montage der Doppelkupplung 12 am Getriebe wird die Doppelkupplung 10 vorzugsweise in dem vorstehend erläuterten Zusammenbauzustand eingebaut, d. h. auf die Getriebeeingangswellen aufgeschoben. Um den Sicherungsring 322 auf der Getriebeeingangswelle 18 anzubringen, muss dann die Eingangsnabe 40 samt dem Mitnehmer 310 nach Lösen des Sicherungsrings 312 entfernt werden. Zum Schluss wird dann die Eingangsnabe 40 mit dem daran angebrachten Mitnehmer 310 wieder eingebaut und am Lamellenhalteabschnitt 48 durch den Sicherungsring 312 gesichert. Um den Nassraum vom Trockenraum zu trennen, wird dann noch die deckelartige Wandung 130 eingebaut.

## Patentansprüche

1. Mehrfach-Kupplungseinrichtung, ggf. Doppel-Kupplungseinrichtung (10), für die Anordnung in einem Antriebsstrang eines Kraftfahrzeugs zwischen einer Antriebseinheit und einem Getriebe, wobei die Kupplungseinrichtung eine einer ersten Getriebeeingangswelle (16) zugeordnete erste Lamellen-Kupplungsanordnung (20; 24) und eine einer zweiten Getriebeeingangswelle (18) zugeordnete zweite Lamellen-Kupplungsanordnung (24; 20) aufweist,
wobei von den beiden Getriebeeingangswellen die eine (18) sich durch die andere (16) erstreckt und von einem ersten Lamellenpaket der ersten Kupplungsanordnung und einem zweiten Lamellenpaket der zweiten Kupplungsanordnung das eine (22) das andere (26) zumindest in einem axialen Überlappungsbereich radial außen umgibt,
wobei eine Eingangsseite der Kupplungseinrichtung eine an einer Abtriebswelle der Antriebseinheit direkt oder indirekt angekoppelte oder ankoppelbare Eingangsnabe (40) oder Eingangswelle (im Folgenden nur als Eingangsnabe bezeichnet) aufweist, die mit einem Außenlamellenträger (28; 32) der ersten Kupplungsanordnung und einem Außenlamellenträger (32; 28) der zweiten Kupplungsanordnung in Drehmitnahmeverbindung steht,
wobei die Außenlamellenträger jeweils einen sich bezogen auf eine Drehachse der Kupplungseinrichtung im Wesentlichen axial erstreckenden, als Eingangsseite der jeweiligen Kupplungsanordnung dienenden Lamellenhalteabschnitt (48 bzw. 50) und einen sich hieran nach radial innen anschließenden, mit dem Lamellenhalteabschnitt einstückigen oder daran fest angebrachten Trägerabschnitt (44) aufweisen, und
wobei ein jeweiliger Innenlamellenträger (30 bzw. 34) der ersten und zweiten Kupplungsanordnung, der als Ausgangsseite der betreffenden Kupplungsanordnung dient, mit der ersten bzw. zweiten Getriebeeingangswelle in Drehmitnahmeverbindung steht oder bringbar ist,
wobei von den beiden Kupplungsanordnungen die das radial äußere Lamellenpaket (22) aufweisende Kupplungsanordnung mit ihrem Innenlamellenträger (30) an der radial inneren Getriebeeingangswelle (18) angeschlossen oder anschließbar ist und die das radial innere Lamellenpaket (26) aufweisende Kupplungsanordnung mit ihrem Innenlamellenträger (34) an der radial äußeren Getriebeeingangswelle (16) angeschlossen oder anschließbar ist,
wobei der Trägerabschnitt (44) an einer Lagerhülse fest angebracht oder integral ist, über die die Kupplungseinrichtung unter Vermittlung einer Radiallageranordnung (302) an der radial äußeren Getriebeeingangswelle (16) gelagert ist,
wobei der Trägerabschnitt (44) des zum radial äußeren Lamellenpaket (22) zugehörigen Außenlamellenträgers (28) den Trägerabschnitt des zum radial inneren Lamellenpaket zugehörigen Außenlamellenträgers (32) bildet,
**dadurch gekennzeichnet, dass** sich der den Trägerabschnitt des zum radial inneren Lamellenpaket zugehörigen Außenlamellenträgers bildende Teil des Trägerabschnitts des zum radial Äußeren Lamellenpaket zugehörigen Außenlamelle Trägers
von der Lagerhülse weg in radialer Richtung über den Innenlarnellenträger (34) des inneren Lamellenpakets (26) hinaus erstreckt.

2. Kupplungseinrichtung nach Anspruch 1, **dadurch gekennzeichnet, dass** die Eingangsnabe (40) über eine Radiallageranordnung (150) an der radial inneren Getriebeeingangswelle (18) radial gelagert oder lagerbar ist.

3. Kupplungseinrichtung nach einem der Ansprüche 1 bis 2, **dadurch gekennzeichnet, dass** die Kupplungsanordnungen jeweils mit einem integrierten, sich im Betrieb mitdrehenden hydraulischen Nehmerzylinder (56, 58) ausgeführt sind, über den die jeweilige Kupplungsanordnung auf hydraulischem Wege betätigbar ist, wobei ein Nehmerzylinderraum des zur Betätigung des radial inneren Lamellenpakets (26) dienenden Nehmerzylinders (58) zwischen dem Trägerabschnitt (44) und einem Betätigungskolben (62) des Nehmerzylinders ausgebildet ist.

4. Kupplungseinrichtung nach Anspruch 3, **dadurch gekennzeichnet, dass** ein Nehmerzylinderraum des zur Betätigung des radial äußeren Lamellenpakets (24) dienenden Nehmerzylinders (56) zwischen einem die Eingangsnabe (40) mit dem Lamellenhalteabschnitt (48) des diesem Lamellenpakets zugehörigen Außenlamellenträgers (28) koppelnden Mitnehmer (310) und einem Betätigungskolben (60) des Nehmerzylinders ausgebildet ist.

5. Kupplungseinrichtung nach einem der Ansprüche 1 bis 4, **dadurch gekennzeichnet, dass** in der Eingangsnabe (40) wenigstens ein Betriebsmediumkanal (100; 100') ausgebildet ist, über den wenigstens einer der Kupplungsanordnungen Betriebsmedium von einer Betriebsmediumversorgung zuführbar ist oder/und dass in der Eingangsnabe wenigstens ein Hydraulikkanal (68, 70; 68) ausgebildet ist, über den wenigstens einer der Nehmerzylinder an einer zugeordneten Hydraulikdruckquelle angeschlossen oder anschließbar ist.

## Claims

1. Multiple clutch device, possibly dual clutch device (10), for arrangement in a drive train of a motor vehicle between a drive unit and a transmission, the clutch device having a first multiple disc clutch arrangement (20; 24) which is assigned to a first transmission input shaft (16) and a second multiple disc clutch arrangement (24; 20) which is assigned to a second transmission input shaft (18),
one (18) of the two transmission input shafts extending through the other (16), and one (22) of a first multiple disc assembly of the first clutch arrangement and a second multiple disc assembly of the second clutch arrangement surrounding the other (26) radially to the outside, at least in an axial overlapping region,
an input side of the clutch device having an inlet hub (40) or inlet shaft (called only input hub in the following text) which is coupled or can be coupled directly or indirectly to an output shaft of the drive unit and is in rotary driving connection with an outer multiple disc carrier (28; 32) of the first clutch arrangement and an outer multiple disc carrier (32; 28) of the second clutch arrangement,
the outer multiple disc carriers each having a disc holding section (48 and 50), which extends substantially axially in relation to a rotational axis of the clutch device and serves as input side of the respective clutch arrangement, and a carrier section (44) which adjoins the former radially to the inside and is integral to the disc holding section or is attached firmly to it, and
a respective inner multiple disc carrier (33 and 34) of the first and second clutch arrangements being in rotary driving connection or being capable of being brought into rotary driving connection with the first and second transmission input shafts, which inner multiple disc carrier (33 and 34) serves as output side of the relevant clutch arrangement,
of the two clutch arrangements, the clutch arrangement which has the radially outer multiple disc assembly (22) being connected or being capable of being connected by way of its inner multiple disc carrier (30) to the radially inner transmission input shaft (18), and the clutch arrangement which has the radially inner multiple disc assembly (26) being connected or being capable of being connected by way of its inner multiple disc carrier (34) to the radially outer transmission input shaft (16),
the carrier section (44) being attached fixedly to a bearing sleeve or is of integral configuration with the latter, via which bearing sleeve the clutch device is mounted on the radially outer transmission input shaft (16), possibly via a radial bearing arrangement (302),
the carrier section (44) of the outer multiple disc carrier (28) which belongs to the radially outer multiple disc assembly (22) forming the carrier section of the outer multiple disc carrier (32) which belongs to the radially inner multiple disc assembly,
**characterized in that** the part, which forms the carrier section of the outer multiple disc carrier belonging to the radially inner multiple disc assembly, of the carrier section of the outer multiple disc carrier which belongs to the radially outer multiple disc assembly extends away from the bearing sleeve in radial direction beyond the inner multiple disc carrier (34) of the inner multiple disc assembly (26).

2. Clutch device according to Claim 1, **characterized in that** the input hub (40) is mounted or can be mounted radially on the radially inner transmission input shaft (18) via a radial bearing arrangement (150).

3. Clutch device according to one of Claim 1 to 2, **characterized in that** the clutch arrangements are configured in each case with an integrated, hydraulic slave cylinder (56, 58) which corotates during operation and via which the respective clutch arrangement can be actuated hydraulically, a slave cylinder chamber of the slave cylinder (58) which serves to actuate the radially inner multiple disc assembly (26) being formed between the carrier section (44) and an actuating piston (62) of the slave cylinder.

4. Clutch device according to Claim 3, **characterized in that** a slave cylinder chamber of the slave cylinder (56) which serves to actuate the radially outer multiple disc assembly (24) is formed between an actuating piston (60) of the slave cylinder and a driver (310) which couples the input hub (40) to the disc holding section (48) of the outer multiple disc carrier (28) which belongs to this multiple disc assembly.

5. Clutch device according to one of Claims 1 to 4, **characterized in that** at least one operating-medium channel (100; 100') is formed in the input hub (40), via which operating-medium channel (100; 100') at least one of the clutch arrangements can be supplied with operating medium by an operating-medium supply means, and/or **in that** at least one hydraulic channel (68, 70; 68) is formed in the input hub, via which hydraulic channel (68, 70; 68) at least one of the slave cylinders is connected or can be connected to an associated hydraulic pressure source.

## Revendications

1. Système d'embrayage multiple, éventuellement système d'embrayage double (10), destiné à être disposé dans une ligne d'entraînement d'un véhicule automobile entre une unité d'entraînement et une boîte de vitesses, dans lequelle système d'embrayage comprend un premier arrangement d'embrayage multidisque (20 ; 24) associé à un premier arbre d'entrée (16) de la boîte de vitesses et un deuxième arrangement d'embrayage multidisque (24 ; 20) associé à un deuxième arbre d'entrée (18) de la boîte de vitesses,
dans lequel un (18) arbre d'entrée de la boîte de vitesses s'étend à travers l'autre (16) et un (22) parmi un premier paquet de disques du premier arrangement d'embrayage et un deuxième paquet de disques du deuxième arrangement d'embrayage entoure l'autre (26) de façon radialement extérieure au moins dans une zone de recouvrement axiale,
dans lequel un côté d'entrée du système d'embrayage présente un moyeu d'entrée (40) ou un arbre d'entrée (appelé uniquement dans la suite moyeu d'entrée) qui est ou qui peut être couplé directement ou indirectement à un arbre d'entraînement de l'unité d'entraînement, et qui est en relation d'entraînement rotatif avec un porte-disques extérieur (28 ; 32) du premier arrangement d'embrayage et avec un porte-disques extérieur (32 ; 28) du deuxième arrangement d'embrayage,
dans lequel les porte-disques extérieurs présentent chaque fois un segment de support de disques (48 ou 50) servant de côté d'entrée de l'arrangement d'embrayage respectif et s'étendant pour l'essentiel axialement par rapport à un axe de rotation du système d'embrayage et un segment porteur (44) se raccordant radialement vers l'intérieur à celui-ci et formé d'une pièce avec le segment de support de disques ou assemblé solidairement à celui-ci, et
dans lequel un porte-disques intérieur respectif (30 ou 34) du premier et du deuxième arrangements d'embrayage, qui sert de côté de sortie de l'arrangement d'embrayage concerné, est ou peut être mis en relation d'entraînement rotatif avec le premier ou le deuxième arbre d'entrée de la boîte de vitesses,
parmi les deux arrangements d'embrayage, l'arrangement d'embrayage présentant le paquet de disques radialement extérieur (22) est ou peut être relié par son porte-disques intérieur (30) à l'arbre d'entrée radialement intérieur (18) de la boîte de vitesses et l'arrangement d'embrayage présentant le paquet de disques radialement intérieur (26) est ou peut être relié par son porte-disques intérieur (34) à l'arbre d'entrée radialement extérieur (16) de la boîte de vitesses,
dans lequel le segment porteur (44) étant solidaire d'une douille de palier, ou étant intégrée avec celle-ci, par laquelle le système d'embrayage est monté sur l'arbre d'entrée radialement extérieur (16) de la boîte de vitesses, par l'intermédiaire d'un arrangement de palier radial (302).
dans lequel le segment porteur (44) du porte-disques extérieur (28) correspondant au paquet de disques radialement extérieur (22) forme le segment porteur du porte-disques extérieur (32) correspondant au paquet de disques radialement intérieur,
**caractérisé en ce que** la partie formant le segment porteur du porte-disques extérieur appartenant au paquet de disques radialement intérieur, partie formant le segment porteur du porte-disques extérieur appartenant au paquet de disques radialement extérieur, s'étend depuis la douille de palier dans la direction radiale au-delà du porte-disques intérieur (34) du paquet de disques intérieur (26).

2. Système d'embrayage selon la revendication 1, **caractérisé en ce que** le moyeu d'entrée (40) est ou peut être monté radialement sur l'arbre d'entrée radialement intérieur (18) de la boîte de vitesses par l'intermédiaire d'un arrangement de palier radial (150).

3. Système d'embrayage selon l'une quelconque des revendications 1 à 2, **caractérisé en ce que** les arrangements d'embrayage sont chaque fois réalisés avec un cylindre récepteur hydraulique (56, 58) intégré, tournant également en fonctionnement, par lequel l'arrangement d'embrayage respectif peut être actionné par voie hydraulique, dans lequel une chambre de cylindre récepteur du cylindre récepteur (58) servant à actionner le paquet de disques radialement intérieur (26) est ménagée entre le segment porteur (44) et un piston d'actionnement (62) du cylindre récepteur.

4. Système d'embrayage selon la revendication 3, **caractérisé en ce qu'**une chambre de cylindre récepteur du cylindre récepteur (56) servant à actionner le paquet de disques radialement extérieur (24) est ménagée entre un entraîneur (310) couplant le moyeu d'entrée (40) au segment de support de disques (48) du porte-disques extérieur (28) correspondant à ce paquet de disques et un piston d'actionnement (60) du cylindre récepteur.

5. Système d'embrayage selon l'une quelconque des revendications 1 à 4, **caractérisé en ce qu'**au moins un canal de fluide de fonctionnement (100 ; 100') est réalisé dans le moyeu d'entrée (40), par lequel un fluide de fonctionnement peut être envoyé à partir d'une source de fluide de fonctionnement à au moins un des arrangements d'embrayage ou/et **en ce qu'**au moins un canal hydraulique (68, 70 ; 68) est réalisé dans le moyeu d'entrée, par lequel au moins un des cylindres récepteurs est ou peut être raccordé à une source de pression hydraulique associée.
